# EUROPÄISCHE PATENTSCHRIFT

(11) **EP 3 493 374 B1**
(45) Veröffentlichungstag und Bekanntmachung des Hinweises auf die Patenterteilung: **30.12.2020**
(21) Anmeldenummer: 18204268.9
(22) Anmeldetag: 05.11.2018
(51) Int. Cl.: H02K 5/14, H02K 5/10

(54) **ELEKTRISCHE MASCHINE MIT EINER VON EINEM GEHÄUSE UMGEBENEN GLEITKONTAKTANORDNUNG SOWIE VORRICHTUNG MIT EINER ELEKTRISCHEN MASCHINE**
ELECTRIC MACHINE WITH A SLIDING CONTACT ASSEMBLY SURROUNDED BY A HOUSING AS WELL AS A DEVICE WITH AN ELECTRIC MACHINE
MACHINE ÉLECTRIQUE DOTÉE D'UN AGENCEMENT DE CONTACT GLISSANT ENTOURÉ D'UN BOÎTIER AINSI QUE DISPOSITIF DOTÉ D'UNE MACHINE ÉLECTRIQUE

(30) Priorität: 30.11.2017 DE 102017221556
(43) Veröffentlichungstag der Anmeldung: 05.06.2019
(73) Patentinhaber: Siemens Mobility GmbH, 81739 München (DE)
(72) Erfinder: Vogt, Jens, 12587 Berlin (DE)

(56) Entgegenhaltungen:
- EP-A2- 1 333 559
- WO-A1-2015/040823
- JP-U- S61 123 652

## Beschreibung

Die Erfindung betrifft eine elektrische Maschine mit einer von einem Gehäuse umgebenen Gleitkontaktanordnung, welche einen Kollektor und zumindest zwei Bürsten aufweist, wobei das Gehäuse zumindest eine mittels einer Abdeckung abgedeckte Zugangsöffnung aufweist.

Gattungsgemäße elektrische Maschinen sind aus den Druckschriften EP 1 333 559 A2, JP S61 123652 U und US 2003/0168083 A1 bekannt.

Bei der in der Druckschrift EP 1 333 559 A2 beschriebenen elektrischen Maschine sind mehrere radial oberhalb der Gleitkontaktanordnung ausgebildete Zugangsöffnungen vorgesehen, welche es erlauben, anstelle herkömmlicher Bürsten längere Ersatzbürsten zu verwenden. Dabei erstreckt sich die zusätzliche Länge einer jeweiligen Ersatzbürste durch eine jeweilige Zugangsöffnung. Die Abdeckung bildet Vorsprünge, welche sich nach außen erstrecken und zur Aufnahme der zusätzlichen Länge der Ersatzbürsten dienen.

Bei der in der Druckschrift JP S61 123652 U beschriebenen elektrischen Maschine erleichtern die Zugangsöffnungen das Reinigen der elektrischen Maschine.
Bei der in der Druckschrift US 2003/0168083 A1 beschriebenen elektrischen Maschine ist vorgesehen, den durch eine Abnutzung der Bürsten als Verunreinigungsnebenprodukt entstehenden leitfähigen Bürstenstaub, welcher elektrische Kurzschlüsse oder Lichtbogenbildung verursachen kann, mittels eines Vakuumextraktionssystems zu extrahieren.

Außerdem ist aus der Druckschrift WO 2015/040823 A1 eine elektrische Maschine bekannt, bei der innerhalb des Gehäuses ein Staubsammelabschnitt vorgesehen ist, welcher über Staubschutzplatten Bürstenverschleißpulver sammelt.

Der Erfindung liegt die Aufgabe zu Grunde, eine gattungsgemäße elektrische Maschine mit einer von einem Gehäuse umgebenen Gleitkontaktanordnung derart weiterzubilden, dass anfallender Bürstenstaub auf einfache Weise extrahiert wird.

Gelöst wird diese Aufgabe durch eine elektrische Maschine gemäß Patentanspruch 1.

Ein wesentlicher Vorteil besteht darin, dass sowohl die Zugangsöffnung als auch die Abdeckung, welche im betriebsbereiten Zustand der elektrischen Maschine die Zugangsöffnung abdeckt, eine Doppelfunktion ausüben. Zum einen dienen sie dazu, für Wartungsarbeiten Zugang zum Inneren der elektrischen Maschine zu erhalten. Zum anderen dienen sie nun bei der erfindungsgemäßen Lösung zusätzlich dazu, den anfallenden Bürstenstaub gezielt zu extrahieren, wobei die Zugangsöffnung einen Austritt des Bürstenstaubes, insbesondere aus dem Bereich der Gleitkontaktanordnung, gewährleistet und das Auffangreservoir der Abdeckung ein Auffangen des Bürstenstaubes sicherstellt.

Die Lösung ist damit nicht nur besonders einfach, sondern zudem auch sehr kostengünstig, da keine zusätzlichen Bauteile erforderlich sind. Es nicht einmal erforderlich, die Zugangsöffnung zu modifizieren, so dass auch bestehende elektrische Maschinen gemäß der erfindungsgemäßen Lösung nachgerüstet werden können.

Die Ausbildung der zumindest eine Zugangsöffnung, insbesondere als Langloch, radial oberhalb der Gleitkontaktanordnung hat den Vorteil, dass der Bürstenstaub auf kürzestem Weg zur Zugangsöffnung und dann durch diese hindurch in das Auffangreservoir der Abdeckung gelangt.

Da das zumindest eine Auffangreservoir erfindungsgemäß mehrere taschenartige Vertiefungen aufweist und die taschenartigen Vertiefungen durch Stege voneinander getrennte sind, wobei die Stege in Einbaulage der elektrischen Maschine ausgehend von einem Boden des Auffangreservoirs aufsteigend in Richtung der Zugangsöffnung geneigt sind, ist das Auffangen des Bürstenstaubes - also ein Zurückhalten des Bürstenstaubes im Auffangreservoir - optimiert.

Vorzugsweise ist zumindest ein Teil der Abdeckung, welcher das zumindest eine Auffangreservoir bildet, aus einem elektrisch nichtleitenden Material gebildet.

Vorzugsweise weist die Abdeckung einen Vorsprung zum Hintergreifen eines die Zugangsöffnung begrenzenden Randabschnittes des Gehäuses auf, da dadurch die Montage der Abdeckung am Gehäuse vereinfacht ist.

Es wird auch als vorteilhaft angesehen, wenn die Abdeckung als Schelle ausgebildet ist, wobei das zumindest eine Auffangreservoir von einer nach außen gewölbten Wulst gebildet ist, welche von einer am Gehäuse anliegenden Abdichtkante umgeben ist. - Bei einer derartigen Gestaltung kann das Gehäuse für den betriebsbereiten Zustand besonders sicher verschlossen und abgedichtet werden.

Vorzugsweise ist die Schelle aus zwei Schellenteilen gebildet, wobei jedes der Schellenteile eines der Auffangreservoire bildet. Diese Ausgestaltung erleichtert die Montage der Abdeckung am Gehäuse. In diesem Zusammenhang ist es auch vorteilhaft, wenn erste Enden der Schellenteile, welche in Einbaulage der elektrischen Maschine nach unten weisen, derart miteinander verbunden sind, dass die Schellenteile relativ zueinander zwischen einer Offenstellung und einer Schließstellung schwenkbar sind. - Vorzugsweise sind zweite Enden der Schellenteile lösbar mit dem Gehäuse und/oder miteinander verbunden.

Die elektrische Maschine kann als ein Gleichstrommotor ausgebildet sein. Weitere Einsatzgebiete sind jedoch denkbar, insbesondere könnte die elektrische Maschine auch als ein Gleichstromgenerator ausgebildet sein.

Die Erfindung betrifft auch eine Vorrichtung mit einer elektrischen Maschine.

Es wird als vorteilhaft angesehen, wenn die elektrische Maschine in einem Außengehäuse installiert ist und die Abdeckung derart gestaltet und mit Abstand zur Innenseite des Außengehäuses und zu übrigen Bauteilen der Vorrichtung angeordnet ist, dass sie nach einem Öffnen des Außengehäuses ohne weitere Demontage der Vorrichtung vom Gehäuse lösbar und so aus der Vorrichtung entnehmbar ist, dass aufgefangener Bürstenstaub nicht aus dem zumindest einen Auffangreservoir fällt.

Die Erfindung wird im Folgenden anhand von Figuren näher erläutert, dabei zeigen die
- Figur 1: eine schematische Darstellung einer erfindungsgemäßen Vorrichtung in Form eines Weichenantriebes mit einer erfindungsgemäßen elektrischen Maschine in Form eines Gleichstrommotors, wobei ein Gehäuse des Gleichstrommotors zwei Zugangsöffnungen aufweist, die
- Figur 2: einen Ausschnitt eines ersten Ausführungsbeispiels der erfindungsgemäßen Vorrichtung, bei der zum Abdecken der beiden Zugangsöffnungen des Gehäuses des Gleichstrommotors eine erste Ausführungsform einer zweiteiligen Abdeckung dient, die
- Figur 3: eine Schnittdarstellung des Ausschnittes gemäß Figur 2 im Bereich der beiden Zugangsöffnungen, welche durch die zweiteilige Abdeckung abgedeckt sind, die

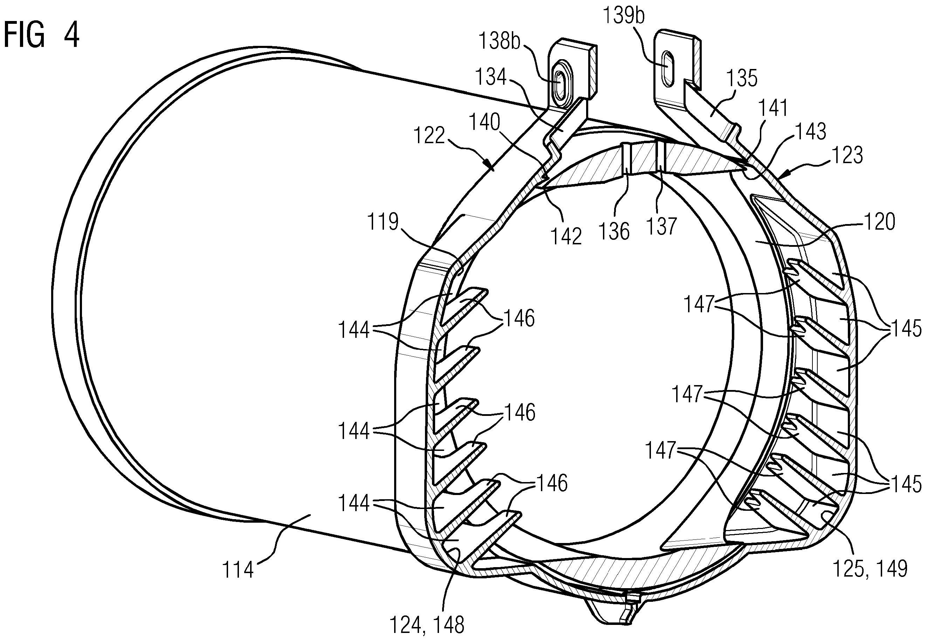

- Figur 4: eine Schnittdarstellung des Gehäuses des Gleichstrommotors im Bereich der beiden Zugangsöffnungen, welche durch die erste Ausführungsform der zweiteiligen Abdeckung abgedeckt sind, die
- Figur 5: die erste Ausführungsform der zweiteiligen Abdeckung in einer aufgeschwenkten Stellung (Offenstellung), die
- Figur 6: einen Ausschnitt eines zweiten Ausführungsbeispiels der erfindungsgemäßen Vorrichtung, bei der zum Abdecken der beiden Zugangsöffnungen des Gehäuses des Gleichstrommotors eine zweite Ausführungsform einer zweiteiligen Abdeckung dient, die

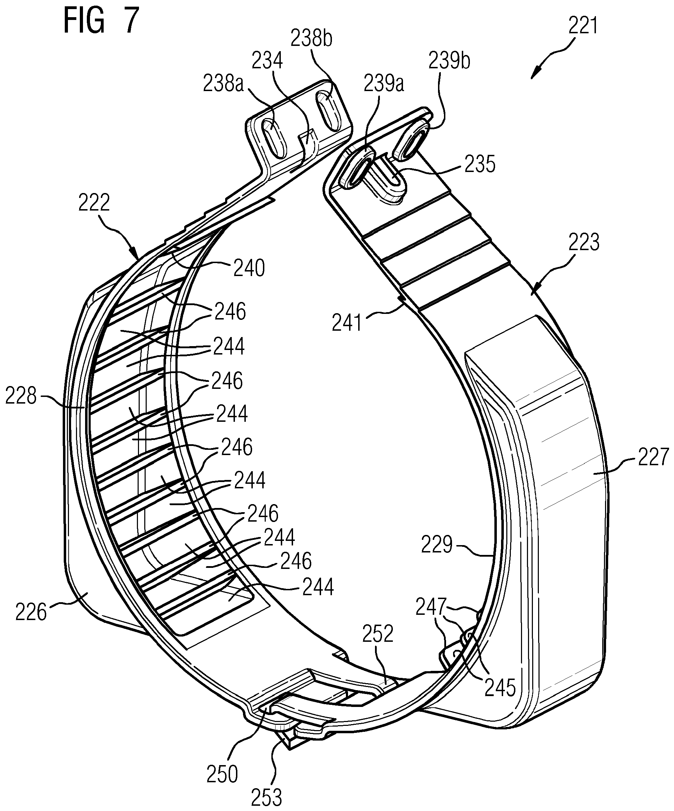

- Figur 7: die zweite Ausführungsform der zweiteiligen Abdeckung in einer zugeschwenkten Stellung (Schließstellung) und die

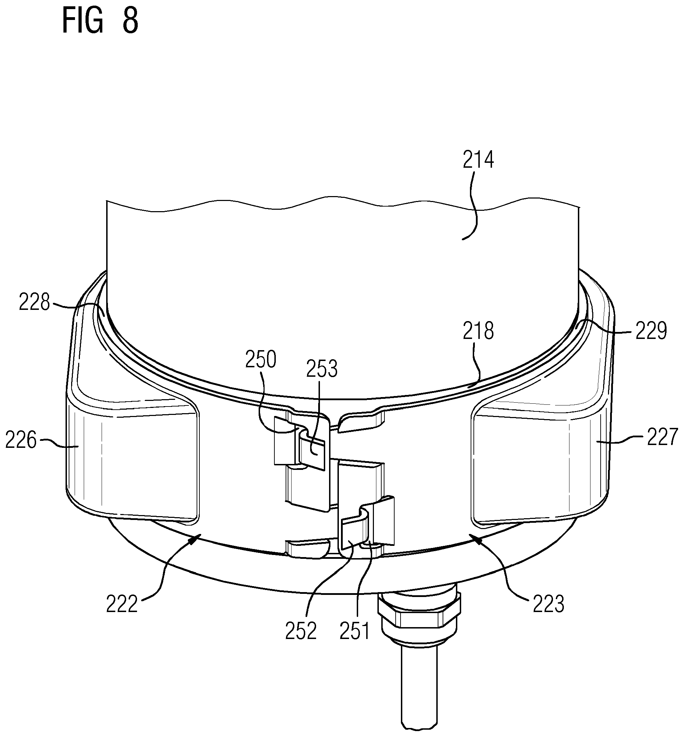

- Figur 8: einen Ausschnitt des Gehäuses des Gleichstrommotors mit der zweite Ausführungsform der zweiteiligen Abdeckung.

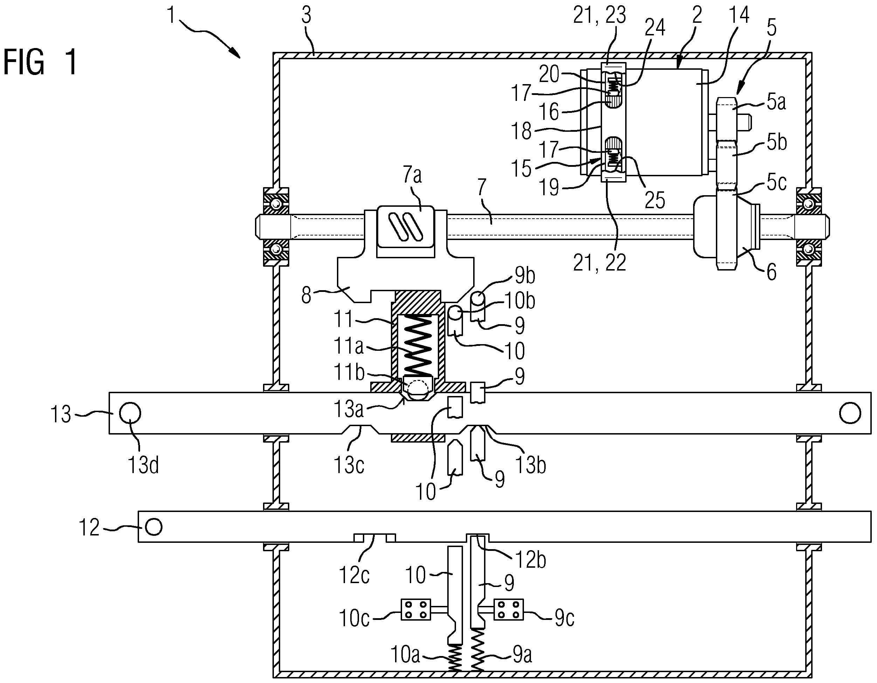

Die in der Figur 1 gezeigte erfindungsgemäße Vorrichtung 1 ist ein elektromechanischer Weichenantrieb mit einer erfindungsgemäßen elektrischen Maschine 2 in Form eines Gleichstrommotors.

Der elektromechanische Weichenantrieb 1 dient in bekannter Weise zum Stellen und Sichern von bewegbaren Elementen im Fahrweg von Schienenfahrzeugen - also insbesondere von bewegbaren Elementen von Gleissperren oder von Weichen, wie beispielsweise von Weichenzungen oder von beweglichen Herzstücken.

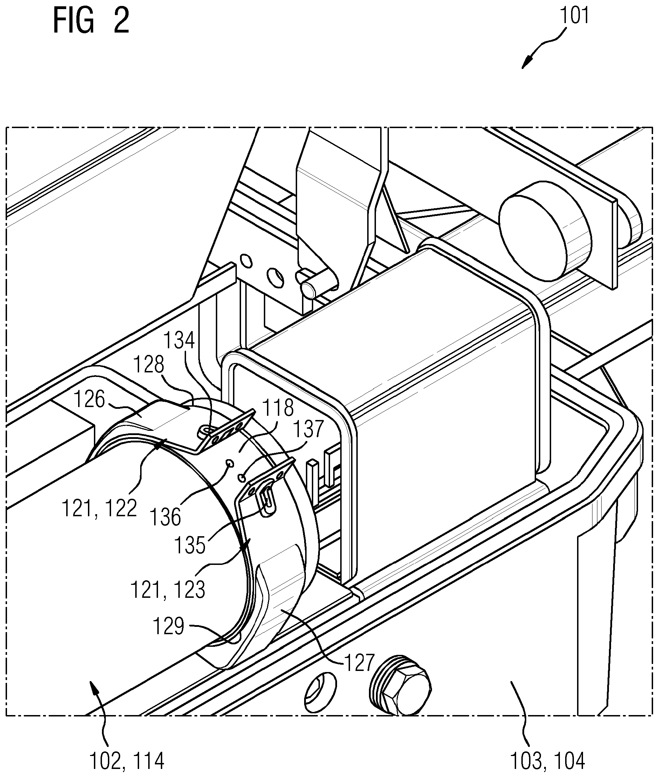

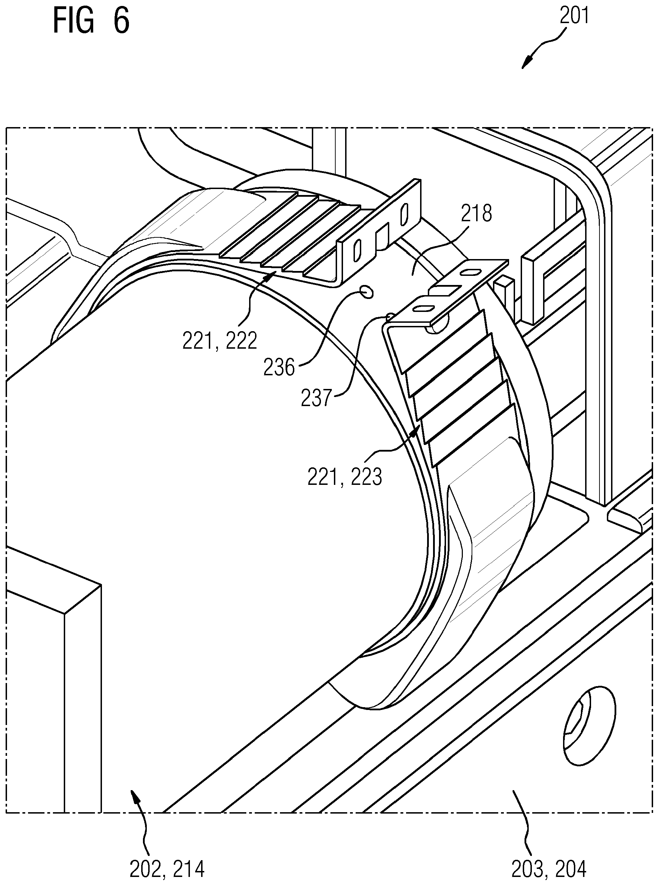

Der elektromechanische Weichenantrieb 1 umfasst ein Außengehäuse (Antriebsgehäuse) 3. Dabei dient ein erstes, vorzugsweise aus Grauguss gebildetes Teil des Außengehäuses 3 als tragendes Element des elektromechanischen Weichenantriebes 1. Bei den in den Figuren 2 bzw. 6 gezeigten Ausführungsbeispielen ist dieses aus Grauguss gebildetes Teil mit dem Bezugszeichen 104 bzw. 204 bezeichnet.

Ein hier nicht im Detail dargestelltes zweites, beispielsweise aus Stahlblech gebildetes Teil des Außengehäuses 3 bildet einen trittfesten Deckel. Zwischen den beiden Teilen des Außengehäuses 3 ist eine umlaufende Dichtung vorgesehen.

Innerhalb des Außengehäuses (des Antriebsgehäuses) 3 befinden sich insbesondere der Gleichstrommotor 2; ein Zahnradvorgelege 5 mit Ritzel 5a, Zwischenrad 5b und Zahnrad 5c; eine einstellbare Stellkraftkupplung 6; ein Kugelgewindetrieb 7 mit Mitnehmer 7a; ein Schaltlineal 8; zwei Sperrschieber 9, 10 mit jeweils zugeordneter Druckfeder 9a bzw. 10a, jeweils zugeordneter Rolle 9b bzw. 10b und jeweils zugeordnetem Schnappschalter 9c bzw. 10c; eine Festhaltekupplung 11 mit vorgespannter Schraubenfeder 11a und Rolle 11b, ein Prüfschieber 12 sowie ein Stellschieber 13.

Das Drehmoment des im Außengehäuse 3 installierten Gleichstrommotors 2 wird über das Zahnradvorgelege 5 auf die Stellkraftkupplung 6 übertragen, vom Kugelgewindetrieb 7 in eine Längskraft umgewandelt und über die Festhaltekupplung 11, welche als Rastkupplung ausgebildet ist, an den Stellschieber 13 weitergeleitet. Ein aus dem Außengehäuse (Antriebsgehäuse) 3 ragendes Ende des Stellschiebers 13 weist zumindest eine Durchgangsbohrung 13d für eine Anschlussverbindung an das zu bewegende Element auf.

Die Schraubenfeder 11a drückt die Rolle 11b in einen gehärteten Rastausschnitt 13a des Stellschiebers 13.

Den federbelasteten Sperrschiebern 9 und 10 sind Ausschnitte 12b und 12c des Prüfschiebers 12 bzw. 13b und 13c des Stellschiebers 13 zugeordnet, um diese in Endlagen zu sperren. Mittels des Schaltlineals 8 wird zu Beginn einer Umstellung des beweglichen Elementes eine Sperrung des Stellschiebers 13 durch den Sperrschieber 9 aufgehoben.

Die Schnappschalter 9c und 10c dienen dabei als Steuer- und Überwachungselemente.

Der Gleichstrommotor 2 ist mit einem kapselnden Gehäuse 14 ausgestattet, welches unter anderem auch eine Gleitkontaktanordnung 15 des Gleichstrommotors 2 umgibt. Der Gleichstrommotor 2 wird auch als Bürsten-Motor bezeichnet, da seine Gleitkontaktanordnung 15 - wie hier dargestellt - einen Kollektor 16 und zumindest zwei Bürsten 17 aufweist. Das kapselnde Gehäuse 14 des Gleichstrommotors weist im Bereich einer Ringnut 18 zwei Zugangsöffnungen 19, 20 in Form von Langlöchern auf. Die Zugangsöffnungen 19, 20 sind radial oberhalb der Gleitkontaktanordnung 15 ausgebildet, so dass leicht ins Innere des Gleichstrommotors 2 gelangt werden kann, um beispielsweise die Bürsten 17 zu installieren bzw. auszutauschen. Hauptbestandteil der Bürsten 17 ist Graphit, so dass diese auch als Kohlebürsten bezeichnet werden. Der Wirkungsweise des Bürsten-Motors 2 entsprechend schleifen die Kohlebürsten 17 unter bestimmten Andruck auf dem Kollektor 16. Auf diese Weise entwickelt der Bürsten-Motor 2, durch Anlegen einer Spannung, Drehzahl und Drehmoment. Bei dem Schleifen fällt allerdings zwangsläufig Bürstenstaub an.

Zum Abdecken bzw. Verschließen der beiden Zugangsöffnungen 19, 20 des Gehäuses 14 des Gleichstrommotors 2 dient eine zweiteiligen Abdeckung 21, welche als Schelle aus einem elektrisch nichtleitenden Material gebildet ist. Durch Lösen, Aufschwenken und ggf. Abnehmen der Schelle 21 können die Zugangsöffnungen 19, 20 freigelegt werden, wodurch ein Zugang zum Inneren des Gleichstrommotors 2, beispielsweise im Falle wartungstechnischer Überprüfungen oder im Falle von Störungen, ermöglicht ist.

Die Schelle 21 ist aus zwei Schellenteilen 22, 23 gebildet, welche in der Figur 1 gebrochen dargestellt und im Weiteren auch als Staubfangkappen bezeichnet sind.

Bei einem in der Figur 2 gezeigten ersten Ausführungsbeispiel 101 der in Figur 1 nur schematisch dargestellten erfindungsgemäßen Vorrichtung ist eine erste Ausführungsform 121 der Schelle vorgesehen.

Jedes der beiden Schellenteile 122, 123 - also jede der Staubfangkappen - bildet jeweils ein Auffangreservoir 124 bzw. 125 zum Auffangen des anfallenden Bürstenstaubes. Jedes der Auffangreservoire 124, 125 ist dabei von einer Wulst 126 bzw. 127 des jeweiligen Schellenteils 122 bzw. 123 gebildet, wobei die jeweilige Wulst 126 bzw. 127 nach außen gewölbt und von einer am Gehäuse 114 anliegenden Abdichtkante 128 bzw. 129 des jeweiligen Schellenteils umgeben ist.

In den beiden Auffangreservoiren 124, 125 wird der anfallende Bürstenstaub gezielt angelagert, so dass er von dem hier nicht gezeigten metallischen Grundkörper des Gleichstrommotors 102 isoliert wird und - insbesondere hinsichtlich der erforderlichen Isolierfestigkeit des Gleichstrommotors 102 - keine Probleme verursachen kann.

Erste Enden der beiden Schellenteile 122, 123, welche in Einbaulage des Gleichstrommotors 102 nach unten weisen, sind derart miteinander verbunden, dass die beiden Schellenteile 122, 123 relativ zueinander zwischen einer Offenstellung und einer Schließstellung schwenkbar sind.

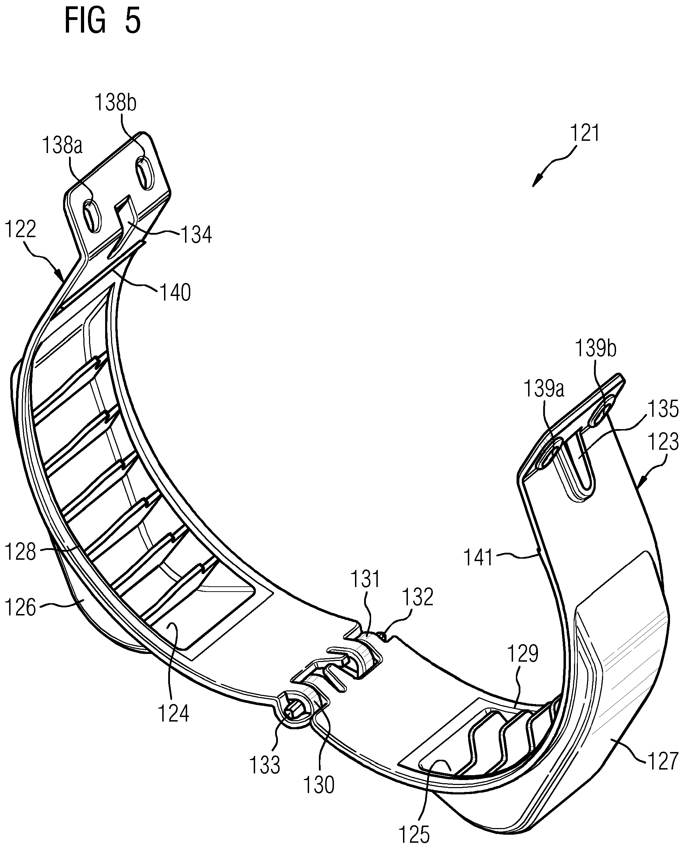

Wie insbesondere aus der Figur 5 ersichtlich, weist bei der ersten Ausführungsform 121 der zweiteiligen Abdeckung jedes der beiden Schellenteile 122, 123 jeweils eine Öse 130 bzw. 131 und einen Stift 132 bzw. 133 auf, wobei der Stift eines jeweiligen Schellenteils in die Öse des jeweils anderen Schellenteils eingreift, so dass beide Schellenteile 122, 123 zusammen ein die Schellenteile verbindendes Scharnier bilden. Zweite Enden der beiden Schellenteile sind lösbar mit dem Gehäuse 114 verbindbar bzw. bei abgeschlossener Montage verbunden. Hierzu weisen die Schellenteile 122, 123 Durchgangsöffnungen 134 bzw. 135 und das Gehäuse 114 Gewindebohrungen 136 und 137 auf, welche zur Ausnahme von nicht gezeigten Verbindungsschrauben dienen. Außerdem sind die zweiten Enden lösbar miteinander verbindbar bzw. bei abgeschlossener Montage verbunden. Hierzu weisen die beiden Schellenteile 122, 123 weitere Durchgangsöffnungen 138a, 138b bzw. 139a, 139b für nicht dargestellte Schraubverbindungen auf.

Im Bereich der zweiten Enden weisen die Schellenteile jeweils einen Vorsprung 140 bzw. 141 zum Hintergreifen eines die zugeordnete Zugangsöffnung begrenzenden Randabschnittes 142 bzw. 143 des Gehäuses 114 auf.

Jedes der beiden Auffangreservoire 124, 125 weist jeweils mehrere taschenartige Vertiefungen 144 bzw. 145 auf, welche im Weiteren auch als Fangtaschen bezeichnet sind. Die taschenartigen Vertiefungen (Fangtaschen) 144 bzw. 145 sind durch Stege 146 bzw. 147 voneinander getrennte, wobei die Stege 146, 147 in Einbaulage des Gleichstrommotors 102 ausgehend von einem Boden 148 bzw. 149 des Auffangreservoirs 124, 125 aufsteigend in Richtung der zugeordneten Zugangsöffnung 119 bzw. 120 geneigt sind. Bei den derart gestalteten Auffangreservoiren 124, 125 verfängt sich der anfallende Bürstenstaub in den Fangtaschen 144, 145 an der Innenseite der Staubfangkappen.

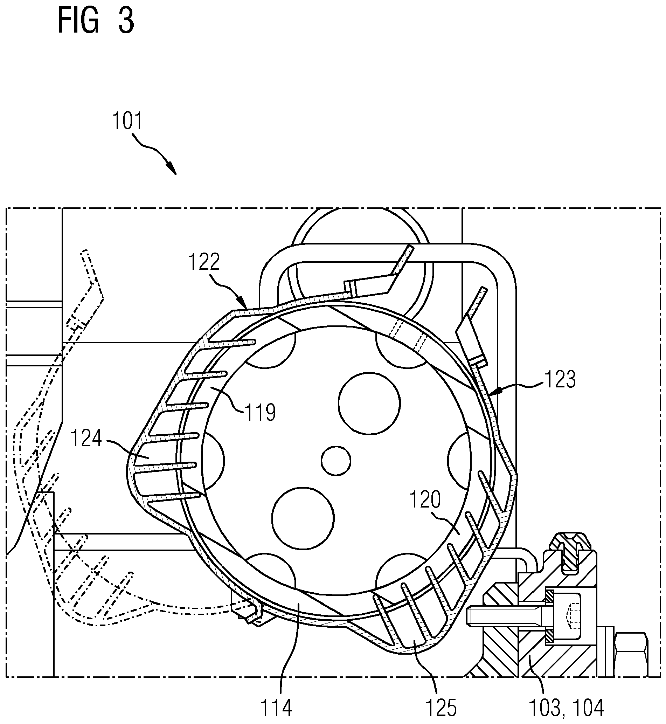

Wie insbesondere die Figuren 2 und 3 verdeutlichen, ist die Abdeckung 121 derart gestaltet und mit Abstand zur Innenseite des Außengehäuses 3 und zu den übrigen Bauteilen des Weichenantriebes 101 angeordnet, dass sie nach einem Öffnen des Außengehäuses 103 ohne weitere Demontage des Weichenantriebes 101 vom Gehäuse 114 lösbar und so aus dem Weichenantrieb 101 entnehmbar ist, dass der aufgefangene Bürstenstaub nicht aus den Auffangreservoiren 124, 125 fällt.

Bei dem in der Figur 6 gezeigten zweiten Ausführungsbeispiels 201 der in Figur 1 nur schematisch dargestellten erfindungsgemäßen Vorrichtung, ist zum Abdecken der beiden hier nicht sichtbaren Zugangsöffnungen des Gehäuses 214 des Gleichstrommotors 202 eine zweite Ausführungsform 221 der zweiteiligen Abdeckung, welche auch als Schelle aus einem elektrisch nichtleitenden Material gebildet ist, vorgesehen.

Die zweite Ausführungsform 221 der zweiteiligen Abdeckung unterscheidet sich von der ersten Ausführungsform 121 der zweiteiligen Abdeckung insbesondere hinsichtlich der konstruktiven Ausgestaltung ihres Scharniers. Bei der zweiten Ausführungsform 221 der zweiteiligen Abdeckung sind die Ösen und Stifte nicht vorgesehen. An deren Stelle weist jedes der beiden Schellenteile 222, 223 jeweils einen Durchbruch 250 bzw. 251 und eine hakenartige Nase 252 bzw. 253 auf, wobei die Nase des jeweiligen Schellenteils in den Durchbruch des jeweils anderen Schellenteils eingreift.

Ein wesentlicher Vorteil der erfindungsgemäßen Lösung ist, dass Anforderungen hinsichtlich der Isolationsfestigkeit über längere Zeiträume eingehalten werden können. Der Wartungsaufwand ist, insbesondere hinsichtlich Personal- und Zeitaufwand, reduziert, da ein Entfernen des angefallenen Bürstenstaubes durch Leeren der Staubfangkappen selten oder auch gar nicht erforderlich ist.

## Patentansprüche

1. Elektrische Maschine (2;102;202) mit einer von einem Gehäuse (14;114;214) umgebenen Gleitkontaktanordnung (15), welche einen Kollektor (16) und zumindest zwei Bürsten (17) aufweist,
wobei das Gehäuse (14;114;214) zumindest eine mittels einer Abdeckung (21;121;221) abgedeckte Zugangsöffnung (19,20;119;120) aufweist,
wobei die Abdeckung (21;121;221) zumindest ein Auffangreservoir (24,25;124,125;224,225) zum Auffangen von Bürstenstaub bildet und
wobei die zumindest eine Zugangsöffnung (19,20;119;120), insbesondere als Langloch, radial oberhalb der Gleitkontaktanordnung (15) ausgebildet ist,
**dadurch gekennzeichnet, dass** das zumindest eine Auffangreservoir (24,25;124,125;224,225) mehrere taschenartige Vertiefungen (144;244) aufweist und die taschenartigen Vertiefungen (144;244) durch Stege (145;245) voneinander getrennte sind, wobei die Stege (145;245) in Einbaulage der elektrischen Maschine (2;102;202) ausgehend von einem Boden (148;248) des Auffangreservoirs (24,25;124,125;224,225) aufsteigend in Richtung der Zugangsöffnung (19,20;119;120) geneigt sind.

2. Elektrische Maschine (2;102;202) nach Anspruch 1,
**dadurch gekennzeichnet**, das s zumindest ein Teil der Abdeckung (21;121;221), welcher das zumindest eine Auffangreservoir (24,25;124,125;224,225) bildet, aus einem elektrisch nichtleitenden Material gebildet ist.

3. Elektrische Maschine (2;102;202) nach einem der Ansprüche 1 oder 2,
**dadurch gekennzeichnet, dass** die Abdeckung (21;121;221) einen Vorsprung (140,141; 240,241) zum Hintergreifen eines die Zugangsöffnung (19,20;119;120) begrenzenden Randabschnittes (142,143) des Gehäuses (14;114;214) aufweist.

4. Elektrische Maschine (2;102;202) nach einem der Ansprüche 1 bis 3,
**dadurch gekennzeichnet, dass** die Abdeckung (21;121;221) als Schelle ausgebildet ist, wobei das zumindest eine Auffangreservoir (24,25;124,125;224,225) von einer nach außen gewölbten Wulst (126,127;226,227) gebildet ist, welche von einer am Gehäuse (14;114;214) anliegenden Abdichtkante (128,129;228,229) umgeben ist.

5. Elektrische Maschine (2;102;202) nach Anspruch 4,
**dadurch gekennzeichnet, dass** die Schelle (21;121;221) aus zwei Schellenteilen (22,23;122,123;222,223) gebildet ist, wobei jedes der Schellenteile (22,23;122,123;222,223) eines der Auffangreservoire (24,25;124,125;224,225) bildet.

6. Elektrische Maschine (2;102;202) nach Anspruch 5,
**dadurch gekennzeichnet, dass** erste Enden der Schellenteile (22,23;122,123;222,223), welche in Einbaulage der elektrischen Maschine (2;102;202) nach unten weisen, derart miteinander verbunden sind, dass die Schellenteile (22,23;122,123;222,223) relativ zueinander zwischen einer Offenstellung und einer Schließstellung schwenkbar sind.

7. Elektrische Maschine (2;102;202) nach einem der Ansprüche 5 oder 6,
**dadurch gekennzeichnet, dass** zweite Enden der Schellenteile (22,23;122,123;222,223) lösbar mit dem Gehäuse (14;114;214) und/oder miteinander verbunden sind.

8. Elektrische Maschine (2;102;202) nach einem der Ansprüche 1 bis 7,
**dadurch gekennzeichnet, dass** die elektrische Maschine (2;102;202) als ein Gleichstrommotor ausgebildet ist.

9. Vorrichtung (1; 101; 201) mit einer elektrischen Maschine (2;102;202),
**dadurch gekennzeichnet, dass** die elektrische Maschine (2;102;202) nach einem der Ansprüche 1 bis 8 ausgebildet ist.

10. Vorrichtung (1; 101; 201) nach Anspruch 9,
**dadurch gekennzeichnet, dass** die elektrische Maschine (2;102;202) in einem Außengehäuse (3;103;203) installiert ist und
die Abdeckung (21;121;221) derart gestaltet und mit Abstand zur Innenseite des Außengehäuses (3;103;203) und zu übrigen Bauteilen der Vorrichtung (1; 101; 201) angeordnet ist, dass sie nach einem Öffnen des Außengehäuses (3;103;203) ohne weitere Demontage der Vorrichtung (1; 101; 201) vom Gehäuse (14;114;214) lösbar und so aus der Vorrichtung (1; 101; 201) entnehmbar ist, dass aufgefangener Bürstenstaub nicht aus dem zumindest einen Auffangreservoir (24,25;124,125;224,225) fällt.

## Claims

1. Electric machine (2; 102; 202) with a sliding contact arrangement (15) surrounded by a housing (14; 114; 214) which has a collector (16) and at least two brushes (17),
wherein the housing (14; 114; 214) has at least one access opening (19, 20; 119; 120) covered by means of a cover (21; 121; 221),
wherein the cover (21; 121; 221) forms at least one collection reservoir (24, 25; 124, 125; 224, 225) for collecting brush dust and
wherein the at least one access opening (19, 20; 119; 120), in particular as an elongated hole, is embodied radially above the sliding contact arrangement (15),
**characterised in that**
the at least one collection reservoir (24, 25; 124, 125; 224, 225) has a number of pocket-type indentations (144; 244) and the pocket-type indentations (144; 244) are separated from one another by means of webs (145; 245), wherein in the installation position of the electric machine (2; 102; 202) the webs (145; 245) are inclined starting from a base (148; 248) of the collection reservoir (24, 25; 124, 125; 224, 225) ascending in the direction of the access opening (19, 20; 119; 120) .

2. Electric machine (2; 102; 202) according to claim 1, **characterised in that** at least one part of the cover (21; 121; 221), which forms the at least one collection reservoir (24, 25; 124, 125; 224, 225), is formed from an electrically nonconducting material.

3. Electric machine (2; 102; 202) according to one of claims 1 or 2,
**characterised in that** the cover (21; 121; 221) has a projection (140, 141; 240, 241) for engaging behind an edge section (142, 143) of the housing (14; 114; 214) which bounds the access opening (19, 20; 119; 120).

4. Electric machine (2; 102; 202) according to one of claims 1 to 3,
**characterised in that** the cover (21; 121; 221) is embodied as a clamp, wherein the at least one collection reservoir (24, 25; 124, 125; 224, 225) is formed of an outwardly arched projection (126, 127; 226, 227), which is surrounded by a sealing edge (128, 129; 228, 229) resting on the housing (14; 114; 214).

5. Electric machine (2; 102; 202) according to claim 4, **characterised in that**
the clamp (21; 121; 221) is formed from two clamp parts (22, 23; 122, 123; 22, 223), wherein each of the clamp parts (22, 23; 122, 123; 222, 223) forms one of the collection reservoirs (24, 25; 124, 125; 224, 225).

6. Electric machine (2; 102; 202) according to claim 5, **characterised in that**
first ends of the clamp parts (22, 23; 122, 123; 222, 223), which point downward in the installation position of the electric machine (2; 102; 202), are connected to one another so that the clamp parts (22, 23; 122, 123; 222, 223) can be pivoted relative to one another between an open position and a closed position.

7. Electric machine (2; 102; 202) according to one of claims 5 or 6,
**characterised in that**
second ends of the clamp parts (22, 23; 122, 123; 222, 223) are detachably connected to the housing (14; 114; 214) and/or to one another.

8. Electric machine (2; 102; 202) according to one of claims 1 to 7, **characterised in that** the electric machine (2; 102; 202) is embodied as a direct current motor.

9. Device (1; 101; 201) with an electric machine (2; 102; 202), **characterised in that** the electric machine (2; 102; 202) is embodied according to one of claims 1 to 8.

10. Device (1; 101; 201) according to claim 9,
**characterised in that**
the electric machine (2; 102; 202) is installed in an outer housing (3; 103; 203), and
the cover (21; 121; 221) is designed and arranged at a distance from the interior of the outer housing (3; 103; 203) and the remaining components of the device (1; 101; 201) so that after opening the outer housing (3; 103; 203) they can be detached from the housing (14; 114; 214) without further disassembly of the device (1; 101; 201) and can thus be removed from the device (1; 101; 201) so that collected brush dust no longer falls out of the at least one collection reservoir (24, 25; 124, 125; 224, 225).

## Revendications

1. Machine (2 ; 102 ; 202) électrique ayant un système (15) de contact glissant, qui est entouré d'un boîtier (14 ; 114 ; 214) et qui a un collecteur (16) et au moins deux balais (17),
dans laquelle le boîtier (14 ; 114 ; 214) a au moins une ouverture (19, 20 ; 119 ; 120) d'accès recouverte au moyen d'un recouvrement (21 ; 121 ; 221),
dans laquelle le recouvrement (21 ; 121 ; 221) forme au moins un réservoir (24, 25 ; 124, 125 ; 224, 225) de collecte pour la capture de poussière de balai, et
dans laquelle la au moins une ouverture (19, 20 ; 119 ; 120) d'accès est constituée, notamment en boutonnière, au dessus radialement du système (15) de contact glissant, **caractérisée en ce que**
le au moins un réservoir (24, 25 ; 124, 125 ; 224, 225) de collecte a plusieurs cavités (144 ; 244) de type à poche et les cavités (144 ; 244) de type à poche sont séparées les unes des autres par des entretoises (145 ; 245), les entretoises (145 ; 245) étant, en position de montage de la machine (2 ; 102 ; 202) électrique, inclinées en montant en direction de l'ouverture (19, 20 ; 119 ; 120) d'accès à partir d'un fond (148 ; 248) du réservoir (24, 25 ; 124, 125 ; 224, 225) de collecte.

2. Machine (2 ; 102 ; 202) électrique suivant la revendication 1,
**caractérisée en ce qu'**
au moins une partie du recouvrement (21 ; 121 ; 221), qui forme au moins un réservoir (24, 25 ; 124, 125 ; 224, 225) de collecte, est en un matériau non conducteur de l'électricité.

3. Machine (2 ; 102 ;202) électrique suivant l'une des revendications 1 ou 2,
**caractérisée en ce que**
le recouvrement (21 ; 121 ; 221) a une saillie (140, 141 ; 240, 241) derrière laquelle se prend une partie (142, 143) de bord, délimitant l'ouverture (19, 20 ; 119 ; 120) d'accès, du boîtier (14 ; 114 ; 214).

4. Machine (2 ; 102 ;202) électrique suivant l'une des revendications 1 à 3,
**caractérisée en ce que**
le recouvrement (21 ; 121 ; 221) est constitué sous la forme d'une bride, le au moins un réservoir (24, 25 ; 124, 125 ; 224, 225) de collecte étant formé par un renflement (126, 127 ; 226, 227) cintré vers l'extérieur, qui est entouré d'un bord (128, 129 ; 228, 29) d'étanchéité, s'appliquant au boîtier (14 ; 114 ; 214).

5. Machine (2 ; 102 ; 202) électrique suivant la revendication 4,
**caractérisée en ce que**
la bride (21 ; 121 ; 221) est formée de deux parties (22, 23 ; 122, 123 ; 222, 223) de bride, chacune des parties (22, 23 ; 122, 123 ; 222, 223) de bride formant l'un des réservoirs (24, 25 ; 124, 125 ; 224, 225) de collecte.

6. Machine (2 ; 102 ; 202) électrique suivant la revendication 5,
**caractérisée en ce que**
des premières extrémités des parties (22, 23 ; 122, 123 ; 222, 223) de bride, qui, lorsque la machine (2 ; 102 ; 202) électrique est à l'état monté, sont tournés vers le bas, sont reliées entre elles de manière à ce que les parties (22, 23 ; 122, 123 ; 222, 223) de bride puissent pivoter les unes par rapport aux autres entre une position d'ouverture et une position de fermeture.

7. Machine (2 ; 102 ;202) électrique suivant l'une des revendications 5 ou 6,
**caractérisée en ce que**
des deuxièmes extrémités des parties (22, 23 ; 122, 123 ; 222, 223) de bride sont reliées de manière amovible au boîtier (14 ; 114 ; 214) et/ou entre elles.

8. Machine (2 ; 102 ;202) électrique suivant l'une des revendications 1 à 7,
**caractérisée en ce que**
la machine (2 ; 102 ; 202) électrique est constituée sous la forme d'un moteur à courant continu.

9. Installation (1 ; 101 ; 201) ayant une machine (2 ; 102 ; 202) électrique,
**caractérisée en ce que**
la machine (2 ; 102 ; 202) électrique est constituée suivant l'une des revendications 1 à 8.

10. Installation (1 ; 101 ; 201) suivant la revendication 9, **caractérisée en ce que**
la machine (2 ; 102 ; 202) électrique est montée dans une enveloppe (3 ; 103 ; 203) extérieure, et
le recouvrement (21 ; 121 ; 221) est conformé et disposé à distance de la face intérieure de l'enveloppe (3 ; 103 ; 203) extérieure et des autres pièces de l'installation (1 ; 101 ; 201), de manière à pouvoir, après une ouverture de l'enveloppe (3 ; 103 ; 203) extérieure, être détachable du boîtier (14 ; 114 ; 214) sans autre démontage de l'installation (1 ; 101 ; 201) et ainsi à pouvoir être retiré de l'installation (1 ; 101 ; 201), de manière à ce que de la poussière de balai collectée ne tombe pas au moins d'un réservoir (24, 25 ; 124, 125 ; 224, 225) de collecte.
